# EUROPÄISCHE PATENTSCHRIFT

(11) **EP 2 501 612 B1**
(45) Veröffentlichungstag und Bekanntmachung des Hinweises auf die Patenterteilung: **27.07.2016**
(21) Anmeldenummer: 10779791.2
(22) Anmeldetag: 16.11.2010
(51) Int. Cl.: B64D 9/00, B64D 11/00, B65D 88/14, B65D 88/74

(54) **TRÄGERSYSTEM ZUM AUFNEHMEN VON BEHÄLTERN IN EINEM FAHRZEUG UND VERWENDUNG EINES TRÄGERSYSTEMS IN EINEM FLUGZEUG**
CARRIER SYSTEM FOR RECEIVING CONTAINERS IN A VEHICLE, AND USE OF A CARRIER SYSTEM IN AN AIRCRAFT
SYSTÈME PORTEUR DESTINÉ À RECEVOIR DES CONTENANTS DANS UN VÉHICULE ET UTILISATION DE CE SYSTÈME PORTEUR DANS UN AVION

(30) Priorität: 17.11.2009 DE 102009053584; 17.11.2009 US 261803 P
(43) Veröffentlichungstag der Anmeldung: 26.09.2012
(73) Patentinhaber: Airbus Operations GmbH, 21129 Hamburg (DE)
(72) Erfinder: DÜSER, Gerd, 21635 Jork (DE)
(74) Vertreter: Kopf Westenberger Wachenhausen Patentanwälte PartG mbB
(86) Internationale Anmeldenummer: PCT/EP2010/067561
(87) Internationale Veröffentlichungsnummer: WO 2011/061181

(56) Entgegenhaltungen:
- WO-A2-2010/108775
- DE-A1-102004 039 372
- DE-C1- 4 308 144
- US-A- 4 428 078
- US-A- 4 914 539
- US-A1- 2009 212 047
- US-B1- 7 030 760

## Beschreibung

### TECHNISCHES GEBIET

Die Erfindung betrifft ein Trägersystem für ein Fahrzeug. Die Erfindung betrifft ferner die Verwendung eines solchen Trägersystems in einem Flugzeug.

### HINTERGRUND DER ERFINDUNG

In Fahrzeugen, die dem Transport von Personen, von Tieren oder von Fracht dienen, ist es verbreitet, zur Verringerung des logistischen Aufwands bei der Beladung und Entladung des Fahrzeugs ein Trägersystem mit austauschbaren Behältern und mit zum Unterbringen der Behälter geeignete Aufnahmeräume zu verwenden. In den Behältern werden etwa zu transportierende Güter oder Lebensmittel zum Versorgen von Passagieren untergebracht.

Zum Aufnehmen von Fracht aller Art werden insbesondere in modernen Verkehrsflugzeugen größere Behälter in Form von Frachtcontainern eingesetzt, die standardisierte Abmessungen aufweisen, vor einem Flug in einen entsprechenden Frachtraum des Flugzeugs eingebracht und nach dem Flug wieder entnommen werden. Für die Bewirtung von Passagieren werden häufig fahrbare Behälter in Form von Servierwagen (sogenannten "Trolleys") eingesetzt, die vor und nach einem Serviervorgang in geeignete Aufnahmeräume von Flugzeugküchen (sogenannten "Galleys") untergebracht werden.

Diese beiden exemplarisch erwähnten Behälterarten weisen die Gemeinsamkeit auf, dass sie sehr häufig bewegt werden und von einem außerhalb des Fahrzeugs liegenden Ort in das Fahrzeug eingebracht und arretiert werden müssen. Gleichzeitig ist durch standardisierte Abmessungen eine vereinfachte Logistik mit einer großen Flexibilität im Einsatz derartiger Behälter gegeben, so dass eine Vielzahl von unterschiedlichen Fahrzeugen mit beliebigen Exemplaren einer Menge gleicher Behälter bestückt werden können.

Neben dem eigentlichen Zweck, Objekte beliebiger Art aufzubewahren, können auch die beispielhaft genannten beiden Behälterarten zusätzliche Aufgaben wahrnehmen, zum Beispiel die Kühlung von Fracht oder von Lebensmitteln. Bei heutzutage verreitet eingesetzten Trolleys wird dafür häufig ein an einer zentralen Stelle des Fahrzeugs erzeugter kalter Luftstrom zur Kühlung verwendet. Hierfür weisen die Trolleys Kühllufteingänge auf, durch die kalte Luft in den betreffenden Trolley eindringen, dort darin gelagerte Lebensmittel-Tabletts umspülen und durch Kühlluftausgänge wieder verlassen kann. Zur Sicherstellung dieser Kühlfunktion ist demnach erforderlich, einen betreffenden Trolley in einen dafür vorgesehenen Aufnahmeraum einzuschieben und zu verriegeln, so dass ein Kühlluftuftausgang in dem Aufnahmeraum mit einem Kühllufteingang des Trolleys fluchtet. Bei der Kühlung von Fracht in Frachtcontainern, die in einem Frachtraum des Fahrzeugs angeordnet sind, können unterschiedliche Kühlverfahren zum Einsatz kommen, wie etwa das Mitführen einer ausreichenden Menge an Trockeneis oder der Betrieb entsprechender Kältemaschinen in den zu kühlenden Frachtcontainern, die über Steckverbinder mit externen Stromquellen in dem Frachtraum verbunden werden müssen.

Zum Erhalt einer lückenlosen Kühlkette werden sowohl Trolleys als auch Frachtcontainer mit Kühlgut während der Lagerung bei einem Catering- oder Transport-Unternehmen gekühlt, wobei auch dort Kühlluft oder Kältemaschinen zum Einsatz kommen.

Sowohl das Herstellen einer fluchtenden Verbindung zwischen einem Kühlluft-Auslass und einem Kühllufteingang eines Trolleys als auch das Herstellen einer elektrischen Verbindung zwischen einer externen Stromquelle und einer Anschlussbuchse eines Frachtcontainers ist besonders bei einer hohen Benutzungs- und Bewegungsfrequenz problematisch. Durch die Verwendung beliebiger Exemplare einer Menge an gleichartigen Behältern und den nicht immer schonenden Umgang mit diesen Behältern kann es oft vorkommen, dass Behälter mit starken Abnutzungserscheinungen und möglicherweise defekten Steckverbindern für eine Verwendung vorgesehen werden, was die Qualität der hergestellten Kühlluft-Verbindung oder der elektrischen Steckverbindung beeinträchtigen könnte. Gleichzeitig ist auch davon auszugehen, dass bei einer frequentierten Benutzung von elektrischen Steckverbindern auch Verunreinigungen in Steckbuchsen geraten, so dass eine manuelle Reinigung erforderlich ist, um eine ausreichend sichere und zuverlässige Steckverbindung herstellen zu können.

DE 43 08 144 C1 offenbart einen Servierwagen mit einem geführten elektrischen Steckverbinder, der mit einem Steckverbinder in einem Staubereich eines Flugzeugs verbindbar ist.

DE 10 2004 039 372 A1 zeigt einen Transportbehälter, bevorzugt ein Container für ein Luftfahrzeug, mit einer geregelten statischen Kühlung, wobei der Transportbehälter mit einem Mittel zum Umwälzen von Luft, einem statischen Kältespeicher und einem aktiven Heizelement ausgestattet ist.

### ZUSAMMENFASSUNG DER ERFINDUNG

Es könnte daher ein Bedarf an einem Trägersystem für ein Fahrzeug bestehen, das mindestens einen Behälter und mindestens einen zum Aufnehmen des Behälters eingerichteten Aufnahmeraum aufweist, das einen robusten Betrieb beliebiger Einrichtungen in den Behältern mit gleichbleibender Qualität der Anbindung an Einrichtungen im Fahrzeug ermöglicht. Diese Anbindung sollte möglichst unanfällig gegenüber äußeren Einflüssen wie Temperatur- und Druckschwankungen, verschmutzter Umgebung und grober Behandlung sein und dennoch eine zuverlässige und sichere Energieübertragung ermöglichen.

Dieser Bedarf könnte durch ein System mit den Merkmalen des unabhängigen Anspruchs 1 gedeckt werden. Vorteilhafte Weiterbildungen sind den Unteransprüchen zu entnehmen.

Gemäß einem ersten Aspekt weist das erfindungsgemäße Trägersystem zur Aufnahme von Ruheräumen in einem Fahrzeug mindestens einen Ruheraum zum Unterbringen von Personen, der mindestens eine Ruheraum aufweisend eine vorbestimmte Behälterform, einen Aufnahmeraum, der an die vorbestimmte Behälterform zum vollständigen Einschieben des Ruheraums in den Aufnahmeraum angepasst ist; mindestens einen in dem Ruheraum angeordneten elektrischen Verbraucher und mindestens eine Primärwicklung in einem ersten Kern und mindestens einer Sekundärwicklung in einem zweiten Kern auf. Die Sekundärwicklung ist in dem Ruheraum angeordnet und die Primärwicklung ist derart fahrzeugseitig befestigbar, dass ein Bewegen des Ruheraums in eine Aufnahmeposition zur Fluchtung der Primärwicklung und der Sekundärwicklung führt. Die Primärwicklung und die Sekundärwicklung sind dazu eingerichtet, eine an der Primärwicklung anliegende Wechselspannung in die Sekundärwicklung zu induzieren. Der elektrische Verbraucher ist mit der Sekundärwicklung verbunden. Das Fluchten bedeutet, dass die Primärwicklung und die Sekundärwicklung zueinander gewandt sind und einen bestimmten Abstand zueinander aufweisen.

Diese Anordnung hat zur Folge, dass beim Anlegen einer Wechselspannung an die Primärwicklung oder die Sekundärwicklung ein magnetischer Kreis zwischen der Primärwicklung und der Sekundärwicklung hergestellt wird. Durch das Anlegen der Wechselspannung wird in der Sekundärwicklung eine Wechselspannung induziert, die in dem Ruheraum an elektrische Verbraucher gelegt werden kann. Das erfindungsgemäße Trägersystem ermöglicht dadurch die Aufnahme eines Ruheraums und die Versorgung einer elektrischen Einrichtung in diesem Ruheraum mit elektrischer Leistung, ohne dass eine mechanische Steckverbindung hergestellt werden muss. Durch die fluchtende Anordnung der Primärwicklung und der Sekundärwicklung wird automatisch beim Einbringen des Ruheraums in eine vorbestimmte Position oder in eine Endposition des Aufnahmeraums eine elektrische Verbindung hergestellt, die auch bei frequentierter Bewegung, starken Gebrauchsspuren oder Abnutzungserscheinungen des Ruheraums keine Qualitätseinbußen erleidet.

Der Aufnahmeraum in dem Fahrzeug ist zum Wahrnehmen der Aufgabe des Aufnehmens des Ruheraums auf die jeweilige Behälterform angepasst, wobei die Behälterform von der Aufgabe des Behälters abhängig ist. Der Kerngedanke der Erfindung ist nicht auf eine bestimmte Behälterform oder auf einen bestimmten Aufnahmeraum zu beschränken ist. Bevorzugt weist der Aufnahmeraum jedoch Arretiermittel auf, die eine Arretierung des Ruheraums in dem Aufnahmeraum ermöglichen, so dass eine Fluchtung der Primärwicklung und der Sekundärwicklung in der vorbestimmten Position bzw. einer Endposition in dem Behälter gewährleistet bleibt.

In einer bevorzugten Ausführungsform des erfindungsgemäßen Transportsystems weist der Ruheraum eine elektrisch betreibbare Kühleinrichtung auf, deren Spannungseingang mit der Sekundärwicklung verbunden ist. Das Einschieben des Ruheraums in dessen Aufnahmeraum und die Fluchtung zwischen der durch eine Wechselspannung beaufschlagten Primärwicklung und der Sekundärwicklung bewirkt das Herstellen eines magnetischen Kreises, die zum Betreiben der in dem Ruheraum angeordnete Kühleinrichtung führt. Die Kühleinrichtung kann dabei auf vielfältige Weise realisiert werden, ohne den Gegenstand der Erfindung auf eine bestimmte Art von Kühleinrichtung zu beschränken. In Betracht kämen hier neben Adsorbtionskältemaschinen, Absorptionskältemaschinen, Kompressionskältemaschinen und thermoelektrische Kältemaschinen auch beliebige andere elektrisch betreibbaren Kältemaschinen.

Gleichermaßen kann in einer ebenso vorteilhaften Weiterbildung des erfindungsgemäßen Trägersystems mindestens eine elektrisch betreibbare Heizeinrichtung in dem Ruheraum untergebracht sein, die mit der Sekundärwicklung verbunden ist.

In einer ebenso vorteilhaften Weiterbildung des erfindungsgemäßen Trägersystems weist der Ruheraum mindestens eine Kühleinrichtung und mindestens eine Heizeinrichtung auf, die elektrisch betreibbar und mit der Sekundärwicklung verbunden sind. Dadurch wird der Behälter dazu befähigt, das Innere des Ruheraums sowohl kühlen als auch erwärmen zu können.

In einer ebenso bevorzugten Weiterbildung des erfindungsgemäßen Trägersystems ist eine elektrisch betreibbare Klimatisierungsvorrichtung in dem Ruheraum angeordnet, die mit der Sekundärwicklung verbunden ist und die neben einer Erwärmung und einer Kühlung auch mindestens eine Umwälzung oder eine Filterung der Luft innerhalb des Ruheraums ermöglichen könnte. Zusätzlich könnte der Ruheraum auch mindestens einen Lufteinlass und mindestens einen Luftauslass zum Einleiten von Frischluft und zum Abführen von verbrauchter Luft aufweisen, so dass insbesondere eine angenehmen Umgebung für Ruheräume oder dergleichen geschaffen werden kann.

Gleichermaßen weist der Ruheraum in einer bevorzugten Weiterbildung des erfindungsgemäßen Trägersystems eine elektrisch betreibbare Beleuchtungseinrichtung auf, die mit der Sekundärwicklung verbunden ist und den Innenraum des Ruheraums beleuchtet.

Eine bevorzugte Ausführungsform des erfindungsgemäßen Trägersystems weist mindestens eine Schalteinheit auf, die dazu eingerichtet ist, einen oder mehrere elektrische Verbraucher in einem Ruheraum in Betrieb nehmen oder außer Betrieb zu setzen. Die Schalteinheit könnte sich dabei sowohl innerhalb des Ruheraums oder an einer Außenseite des Ruheraums, die bei in einen Aufnahmeraum eingeschobenem Behälter erreichbar ist, angeordnet sein. Die Schalteinheit sollte dabei primär dazu verwendet werden, eine elektrische Verbindung zwischen der Sekundärwicklung und elektrischen Verbrauchern in dem Ruheraum herzustellen oder zu trennen. Zusätzlich oder alternativ dazu könnte die Schalteinheit auch an einem Ort im Bereich des Aufnahmeraums angeordnet sein, so dass dadurch ein Anlegen einer Wechselspannung an die Primärwicklung erfolgen oder unterbunden werden kann.

Eine ebenso bevorzugte Weiterbildung des erfindungsgemäßen Trägersystems weist eine erste Steuereinheit mit einem Spannungseingang, einem Dateneingang und einem Signalausgang und mindestens eine zweite Steuereinheit mit einem Signaleingang, einem Datenausgang und einem Spannungsausgang auf. Die erste Steuereinheit ist dazu eingerichtet ist, aus einer am Spannungseingang anliegenden elektrischen Spannung eine Wechselspannung am Signalausgang zu erzeugen, deren Frequenz in Abhängigkeit von den am Dateneingang eingehenden Daten moduliert wird. Die zweite Steuereinheit ist gemäß der vorliegenden Erfindung dazu eingerichtet, aus der am Signaleingang anliegenden Frequenz modulierten Wechselspannung die Daten zu demodulieren und am Datenausgang bereitzustellen. Weiterhin ist die zweite Steuereinheit dazu eingerichtet, eine zur weiteren Verwendung in einem elektrischen Verbraucher aufbereitete Spannung am Spannungsausgang bereitzustellen.

Beim Anschluss des Signalausgangs der ersten Steuereinheit an die Primärwicklung und des Signaleingangs der zweiten Steuereinheit an die Sekundärwicklung wird eine Übertragung von Daten von einem fahrzeugseitigen System, das Daten an die erste Steuereinheit leitet, über den magnetischen Kreis zwischen der Primärwicklung und der Sekundärwicklung in die zweite Steuereinheit an dem Ruheraum ermöglicht. Durch eine derartige Datenverbindung könnte beispielsweise eine Möglichkeit bereitgestellt werden, ohne Abschalten der Primärwicklung oder ohne Betätigen einer Schalteinheit ein Signal an einen elektrischen Verbraucher in dem Behälter zu leiten, das zum Einschalten, Ausschalten oder Verändern eines Betriebszustands führt.

Durch eine zusätzliche Anordnung einer Primärwicklung mit einem ersten Kern in dem Ruheraum und eine Sekundärwicklung mit einem zweiten Kern in einer zur Fluchtung geeigneten Position des Aufnahmeraums könnten elektrische Verbraucher, Sensoren oder andere Einrichtungen gleichzeitig über eine analog zu der in den Ruheraum gerichteten Datenverbindung eine in anderer Richtung verlaufende Datenverbindung herstellen. Dadurch kann der Zustand eines elektrischen Verbrauchers, eine Temperatur oder dergleichen in Form von Daten nach außen geleitet werden. Neben einer lediglich unidirektional wirkenden Datenverbindung können auf diese Weise auch bidirektionale Datenverbindungen erfolgen, so dass ein Ruheraum des erfindungsgemäßen Trägersystems grundsätzlich auch in die Lage versetzt wird, eine Videoüberwachung, Kommunikationsmittel und dergleichen betreiben zu können, ohne auf elektrische Steckverbindungen angewiesen zu sein. Die zusätzliche Primärwicklung könnte benachbart zu der Sekundärwicklung angeordnet sein da an dieser Stelle bereits eine Fluchtung zwischen einer Primärwicklung und einer Sekundärwicklung erreicht werden kann.

In einer bevorzugten Weiterbildung des erfindungsgemäßen Trägersystems weist der Ruheraum zusätzlich eine Primärwicklung mit mindestens einem ersten Kern auf, die an einer Seite des Ruheraums angeordnet ist, die der die Sekundärwicklung und den zweiten Kern aufweisenden Seite entgegengesetzt positioniert ist. Dadurch könnte die Möglichkeit geschaffen werden, mehrere Ruheräume hintereinander oder nebeneinander in einem geeigneten Aufnahmeraum unterzubringen, ohne den Aufnahmeraum dazu einrichten zu müssen, mehrere Primärwicklungen und mehrere erste Kerne zur Versorgung mehrerer Ruheräume mit elektrischer Leistung vorhalten zu müssen. Hierbei wäre auch besonders vorteilhaft, die zusätzliche Primärwicklung in dem Ruheraum mit der Sekundärwicklung in dem Ruheraum zu verbinden. Hierdurch wäre neben einer Weitergabe von elektrischer Leistung auch die grundsätzliche Möglichkeit gegeben, eine unidirektionale Datenverbindung zu realisieren, die durch eine weitere Paarung von Primärwicklung und Sekundärwicklung zu einer unidirektionalen Datenverbindung ausgebaut werden könnte. Dies würde aufnahmeraumseitig das Erfordernis einer Vielzahl von ersten Steuereinheiten zur Datenmodulation eliminieren.

Bevorzugt weist der mindestens eine Ruheraum sowohl eine Kühleinrichtung, eine Heizeinrichtung, ein Klimatisierungsvorrichtung, eine Beleuchtungseinrichtung und/oder Kommunikationsmittel auf. Dadurch können Begleiter eines Passagiertransportfahrzeugs gerade bei längeren Reisen vorgeschriebene Ruhezeiten einhalten und der Ermüdung wird vorgebeugt. Durch derartige beweg- oder austauschbare Ruheräume kann das Fahrzeug mit einfachen Mitteln auf eine bevorstehende längere Reise vorbereitet werden, wobei der Ruheraum alternativ einem Frachtcontainer oder dergleichen weichen kann. Aufwändige mechanische und elektrische Verbindungen sind zur Bereitstellung der grundlegenden Funktionen innerhalb des Ruheraums nicht notwendig.

In einer bevorzugten Ausführungsform des erfindungsgemäßen Trägersystems befindet sich der Aufnahmeraum in einer Fahrzeugküche und ist für die Aufnahme eines Servierwagens eingerichtet. In der Fahrzeugküche könnte eine Schalteinheit angeordnet sein, die zum Einschalten oder Ausschalten elektrischer Verbraucher in dem Ruheraum dient.

In einer ebenso bevorzugten Ausführungsform des erfindungsgemäßen Trägersystems ist der Aufnahmeraum ein Frachtraum eines Fahrzeugs, das zur Aufnahme von Frachtcontainern als Behälter eingerichtet ist. Unter Zeitdruck und räumlich erschwerten Bedingungen erübrigt sich das manuelle Herstellen von elektrischen Verbindungen, so dass eine sichere Funktion der in dem Frachtcontainer angeordneten elektrischen Verbraucher auch bei grober Behandlung des Frachtcontainers oder des Frachtraums selbst gewährleistet werden kann.

Zusätzlich ist bevorzugt, Primärwicklungen und erste Kerne in einem kompakten Primärelement zusammenzufassen und Sekundärwicklungen und zweite Kerne in einem kompakten Sekundärelement zusammenzufassen. Dadurch ist eine besonders einfache Integration von Primär- und Sekundärwicklungen in Behälter und in Bereiche von Aufnahmeräumen möglich.

Zusätzlich wäre besonders bevorzugt, das erfindungsgemäße System durch ein Elektronikgerät derart anzupassen, dass eine Information über die Belegung eines

Aufnahmeraums ermittelt werden kann. Nach Beladen des Fahrzeugs mit Ruheräumen und anderen Behältern jeglicher Form wäre dadurch möglich, die korrekte Belegung und korrekte Position der Behälter festzustellen und vorzugsweise über eine zentrale Anzeigeeinheit anzuzeigen. Technisch könnte dies über das veränderte Resonanzverhalten und den entsprechenden Stromfluss der miteinander kommunizierenden treffenden Primär- und Sekundärwicklungen ermittelt werden. Die Elektronikeinheit könnte nach Aktivieren der Primärspulen ein geändertes Resonanzverhalten bzw. einen Stromfluss feststellen und in der Anzeigeeinheit darstellen. Diese Funktion hilft bei der Beladung zu überprüfen, ob die Beladung vollständig und korrekt erfolgt ist und ob eine Stromversorgung sichergestellt ist.

Der Bedarf könnte ferner durch ein Flugzeug gedeckt sein, das mindestens ein derartiges Trägersystem aufweist. Der Aufnahmeraum könnte als Frachtraum ("Cargo-Compartment") zur Aufnahme von als Frachtcontainer ausgeführten Ruheräumen sein. Die Frachtcontainer weisen Sekundärwicklungen auf, die sich mit einer oder mehreren Primärwicklungen in dem Frachtraum verbinden lassen.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
In den Fig. 1a, 1b und 1c werden grundlegende Ausführungsbeispiele des erfindungsgemäßen Systems schematisch dargestellt.
In den Fig. 2a und 2b werden weitere Ausführungsbeispiele des erfindungsgemäßen Trägersystems mit zusätzlicher Datenverbindung dargestellt.
In den Fig. 3a und 3b werden eine Flugzeugküche und ein Servierwagen dargestellt.
In den Fig. 4a und 4b werden ein Frachtraum eines Flugzeugs und ein Frachtcontainer dargestellt.
In den Fig. 5a und 5b werden ein Frachtraum eines Flugzeugs und ein bewegbarer Ruheraum dargestellt.
In Fig. 6a und 6b werden ein Frachtraum eines Flugzeugs und eine Flugzeugküche mit einem Aufzug für Servierwagen gezeigt.
In Fig. 7 wird ein weiteres grundlegendes Ausführungsbeispiel des erfindungsgemäßen Systems schematisch dargestellt.
In Fig. 8 wird ein Flugzeug mit mindestens einem erfindungsgemäßen Trägersystem dargestellt.

### DETAILLIERTE DARSTELLUNG EXEMPLARISCHER AUSFÜHRUNGSFORMEN

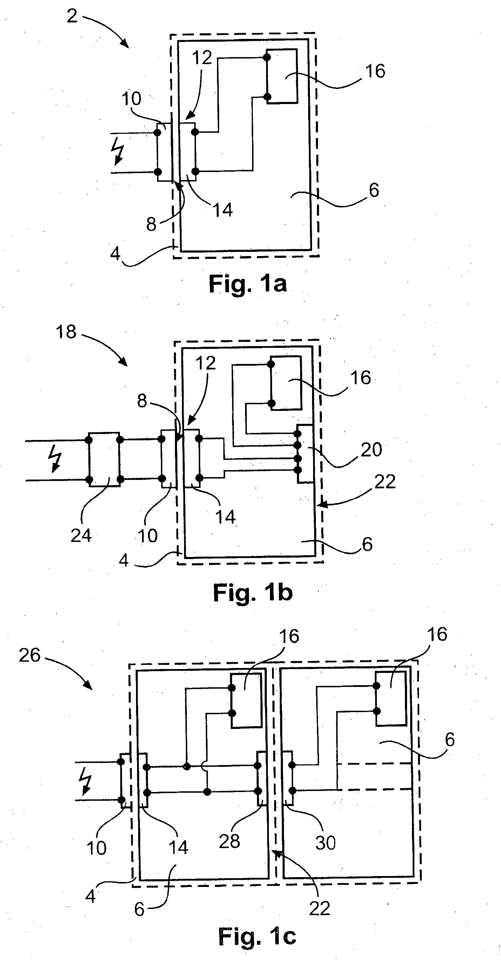

In Fig. 1a wird ein grundlegendes erfindungsgemäßes Trägersystem 2 gezeigt, das einen Aufnahmeraum 4 und einen als Ruheraum ausführbaren Behälter 6 aufweist, der in dem Aufnahmeraum 4 angeordnet werden kann. An einer Begrenzungsfläche 8 des Aufnahmeraums 4 ist ein Primärelement 10 angeordnet, das eine Primärwicklung und einen ersten Kern aufweist. An dem Behälter 6 ist an einer Begrenzungsfläche 12 ein Sekundärelement 14 angeordnet, das aus einer nicht im Detail dargestellten Sekundärwicklung und einem zweiten Kern besteht. Die Positionierung des Sekundärelements 14 ist an die Positionierung des Primärelements angepasst, so dass das Primärelement 10 und das Sekundärelement 14 miteinander fluchten, sobald der Behälter 6 in den Aufnahmeraum 4 vollständig eingeschoben ist.

Sobald eine Wechselspannung an dem Primärelement 10 anliegt, wird eine Spannung in die Sekundärwicklung des Sekundärelements 14 induziert. Diese Spannung kann an einem elektrischen Verbraucher 16 durch eine elektrische Verbindung angelegt werden.

Dies hat den technischen Effekt, dass keine elektrische Steckverbindung zwischen dem Behälter 6 und einer Begrenzungsfläche 8 eines Aufnahmeraums 4 erforderlich ist, um elektrische Verbraucher 16 in einem Behälter 6 betreiben zu können. Auch bei einer gröberen Behandlung des Behälters 6, etwaigen Stürzen oder Beschädigungen sowie der Aufenthalt in einer verschmutzten Umgebung erzeugt keine Beeinträchtigung der elektrischen Verbindung.

In Fig. 1b wird ein erfindungsgemäßes Trägersystem 18 gezeigt, das eine leichte Abwandlung des erfindungsgemäßen Trägersystems 2 aus Fig. 1a darstellt. Zusätzlich zu den bereits geschilderten Elementen weist das erfindungsgemäße Trägersystem 18 eine Schalteinheit 20 im Innern des Behälters 4 auf, die dazu eingerichtet ist, einen Betrieb des elektrischen Verbrauchers 16 zu veranlassen oder zu unterbinden. Die Schalteinheit 20 kann auch an einer Vorderseite 22 des Behälters 4 angeordnet, was die Bedienbarkeit von außen erleichtert. Es kommt hier jedoch ganz auf die Behälterart an, ob die Schalteinheit 20 von außen bedient werden kann. Alternativ oder zusätzlich dazu könnte eine weitere Schalteinheit 24 mit dem Primärelement 10 verbunden sein, die eine Versorgung des Primärelements 10 mit einer elektrischen Spannung herstellen oder unterbrechen kann.

In Fig. 1c wird eine weitere Abwandlung in Form eines erfindungsgemäßen Trägersystems 26 dargestellt, bei dem zwei Behälter 6 in einem gemeinsamen Aufnahmeraum 4 angeordnet werden können, beispielhaft in einer Hintereinanderreihung. Die Besonderheit dieses Ausführungsbeispiels liegt darin, dass in dem Aufnahmeraum 4 lediglich ein einziges Primärelement 10 vorgesehen ist und die Weitergabe der elektrischen Leistung durch eine Kombination aus einem zusätzlichen Primärelement 28 und einem zusätzlichen Sekundärelement 30 in den beiden Behältern 4 vorgesehen ist. Das zusätzliche Primärelement 28 befindet sich bevorzugt an einer Seite 22 des Behälters 6, das dem Primärelement 10 bzw. der Begrenzungsfläche 8 des Aufnahmeraums 4 abgewandt ist.

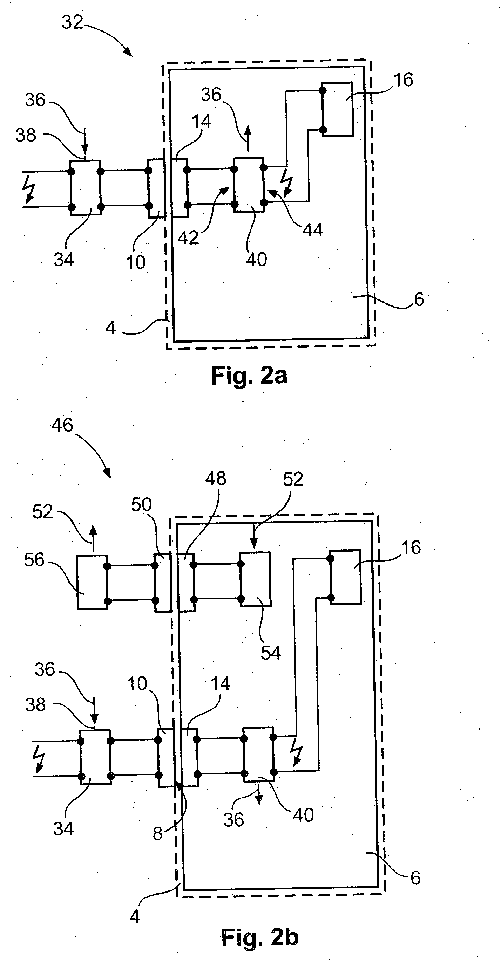

In Fig. 2a wird ein Ausführungsbeispiel eines erfindungsgemäßen Trägersystems 32 gezeigt, bei dem das Primärelement 10 mit einer ersten Steuereinheit 34 in Verbindung steht. Die Steuereinheit 34 ist dazu eingerichtet, Daten 36 über einen Dateneingang 38 aufzunehmen und eine an der ersten Steuereinheit 34 anliegende Wechselspannung in Abhängigkeit der eingehenden Daten 36 zu modulieren und an das Primärelement 10 weiterzuleiten. In dem Behälter 6 befindet sich eine zweite Steuereinheit 40, die mit dem Sekundärelement 14 verbunden ist und dazu eingerichtet ist, aus der an einem Signaleingang 42 anliegenden modulierten Wechselspannung die Daten 36 wieder zu extrahieren und eine Spannung über einen Spannungsausgang 44 einem elektrischen Verbraucher 16 zuzuführen. Dies erlaubt eine unidirektionale Datenverbindung über die Kombination aus dem Primärelement 10 und dem Sekundärelement 14, so dass hierdurch beispielsweise einfache Steueraufgaben zum Ein- oder Ausschalten des elektrischen Verbrauchers 16 oder zum Weitergeben von Betriebsparametern genutzt werden könnte.

In einer Abwandlung in Form eines erfindungsgemäßen Trägersystems 46 wird durch ein zusätzliches Primärelement 48 in dem Behälter 6 und ein zusätzliches Sekundärelement 50 an der Begrenzungsfläche 8 des Aufnahmeraums 4 die Möglichkeit gegeben, Daten 52 von einer beliebigen Datenquelle innerhalb des Behälters 6 über eine zusätzliche erste Steuereinheit 54 an eine zusätzliche zweite Steuereinheit 56 weiterzuleiten. Dadurch könnte eine bidirektionale Kommunikation bzw. Datenverbindung mit beliebigen Einbauten in dem Behälter 6 durchgeführt werden, was beispielsweise die Überwachung von Betriebszuständen elektrischer Verbraucher 16 erlaubt, sich allerdings auch bei der Verwendung eines Behälters 6 als Ruheraum auch Kommunikationsmittel für dort befindliche Personen als nützlich erweisen könnte.

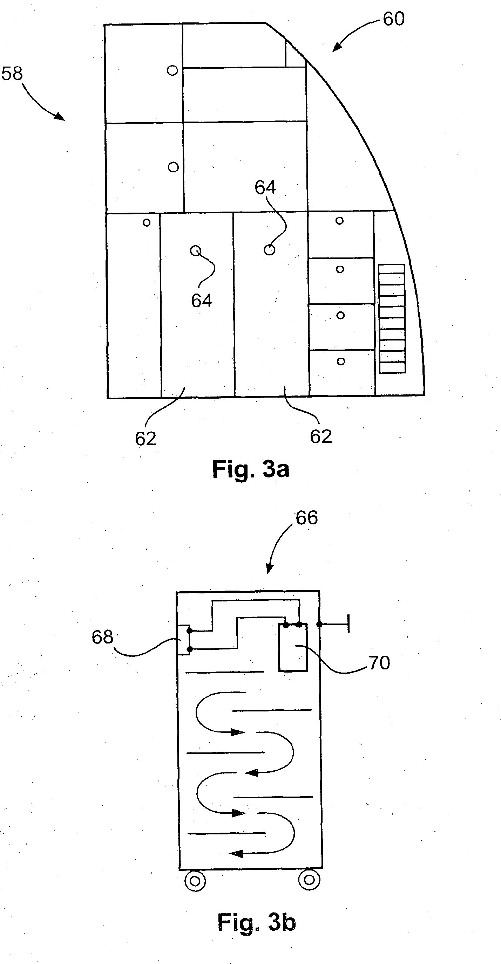

In Fig. 3a wird exemplarisch ein alternatives Trägersystem 58 gezeigt, das in eine Flugzeugküche 60 integriert ist und keine Ruheräume aufnimmt. Dort werden beispielhaft zwei Aufnahmeräume 62 mit jeweils einem Primärelement 64 gezeigt, in die beispielhaft Servierwagen 66 (Trolleys) mit standardisierten Abmessungen aus Fig. 3b eingeschoben werden können.

Ein derartiger Servierwagen 66 weist exemplarisch ein Sekundärelement 68 auf, welches derart angeordnet ist, dass bei eingeschobenem Servierwagen 66 in einen Aufnahmeraum 62 ein Primärelement 64 mit dem Sekundärelement 68 fluchtet und dadurch eine Kühleinrichtung 70 oder ein anderer elektrischer Verbraucher in Betrieb genommen werden könnte.

Die Kühleinrichtung 70 könnte in einer exemplarischen Ausführungsform Luft innerhalb des Servierwagens 66 umwälzen und durch eine entsprechende Vorrichtung, wie etwa ein Peltier-Element, eine Kompressionskältemaschine oder dergleichen kühlen. Die umgewälzte Luft umspült in dem Servierwagen 66 angeordnete Tabletts oder dergleichen, wodurch eine Kühlung hervorgerufen wird.

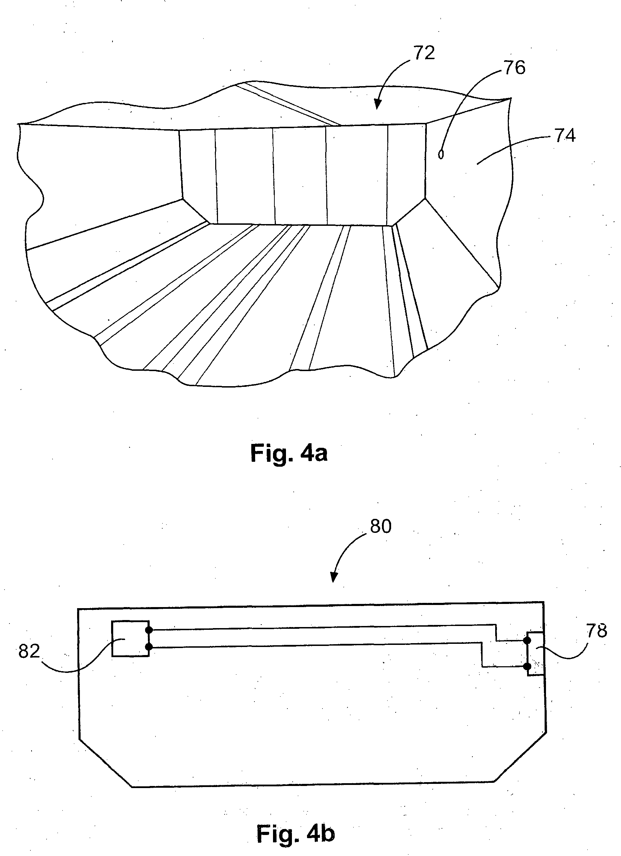

Weiterhin zeigen Fig. 4a und 4b eine ebenfalls alternative, jedoch nicht erfindungsgemäße Ausführung eines Trägersystems in einem Frachtraum 72 eines Flugzeugs, in dem an einer Begrenzungsfläche 74 beispielhaft ein Primärelement 76 angeordnet ist, das mit einem entsprechenden Sekundärelement 78 eines Frachtcontainers 80 aus Fig. 4b fluchtet. Dort ist beispielhaft eine Kühlvorrichtung 82 dargestellt, die mit dem Sekundärelement 78 verbunden ist. Eine derartige Anordnung erlaubt die Kühlung von Fracht innerhalb eines Frachtcontainers 80, die bevorzugt direkt nach dem Einschieben des Frachtcontainers 80 in den Frachtraum 72 als Aufnahmeraum beginnt.

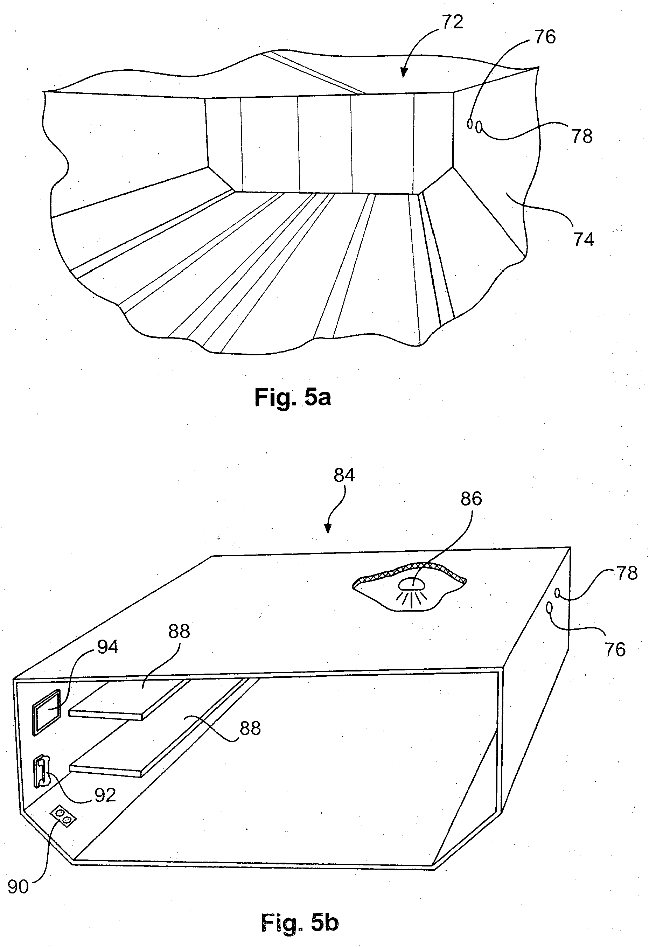

Ferner zeigen Fig. 5a und 5b den Frachtraum 72 eines Flugzeugs, in dem an der Begrenzungsfläche 74 exemplarisch ein Primärelement 76 und ein Sekundärelement 78 angeordnet sind. Der Frachtraum 72 ist dazu eingerichtet, einen bewegbaren Ruheraum 84 aufzunehmen, an dem ein Sekundärelement 78 und ein Primärelement 76 angeordnet sind, die mit dem Primärelement 76 bzw. dem Sekundärelement 78 korrespondieren. Exemplarisch sind eine Beleuchtungseinrichtung 86, zwei Liegen 88, einer Steckdose 90, einem Telefon 92 und einer Anzeigeeinheit 94, etwa als Monitor ausgeführt, dargestellt, die sämtlich über das Primärelement 76 des Fahrzeugraums 72 und das Sekundärelement 78 des bewegbaren Ruheraums 84 mit elektrischem Strom und mit Daten von einer außerhalb des bewegbaren Ruheraums 84 liegenden Datenquelle versorgt werden. Eine Kommunikation des Telefons 92 kann bidirektional erfolgen, indem ausgehende Sprachinformationen über das zusätzliche Primärelement 76 des bewegbaren Ruheraums 84 in das zusätzliche Sekundärelement 78 des Frachtraums 72 geleitet werden. Zur Bewältigung von Datenverbindungen mit relativ hoher Datenrate von exemplarisch mehr als 100 kBit würde es sich anbieten, die gesamte Kommunikation über das zusätzliche Primärelement 76 und das zusätzliche Sekundärelement 78 abzuwickeln oder zwei Paare zusätzlicher Primärelemente 76 und Sekundärelemente 78.

Der bewegbare Ruheraum 84 könnte auch in Form eines Aufenthaltsraums mit anderen Einbauten realisiert sein.

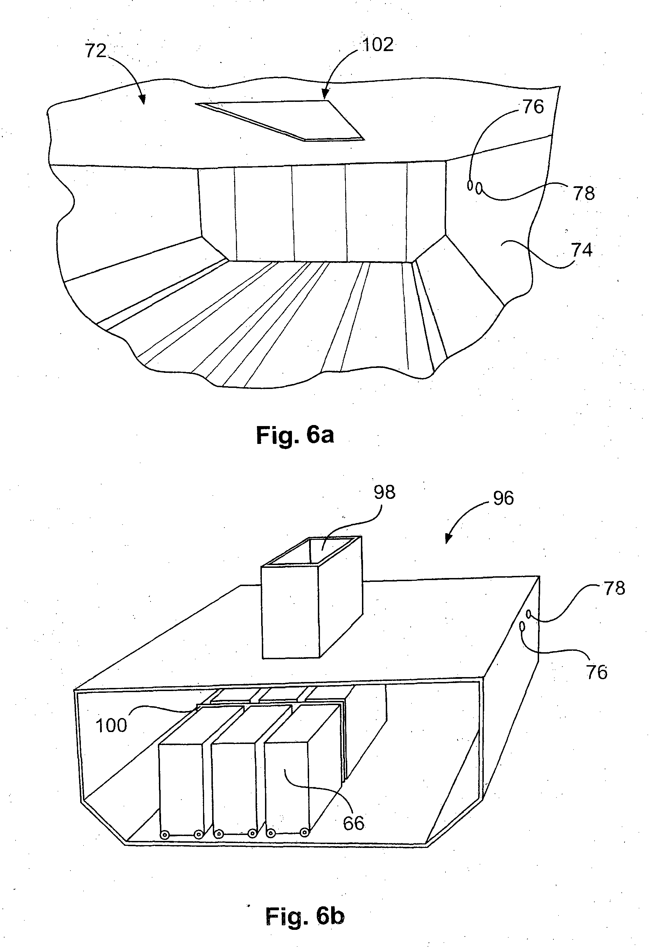

Weiterhin zeigen Fig. 6a und 6b exemplarisch eine weitere alternative, jedoch nicht erfindungsgemäße Ausführung eines Trägersystems mit Frachtraum 72 und einem Behälter 96, der zum Aufnehmen von Servierwagen 66 eingerichtet ist, die über einen Aufzug 98 über eine Kabinenfußbodenöffnung 102 in eine Passagierkabine befördert werden können. Die Servierwagen sind beispielhaft an einem Wandelement 100 arretiert und korrespondieren über Primärelemente und Sekundärelemente wie in Fig. 3a und 3b ersichtlich mit einer elektrischen Stromversorgung.

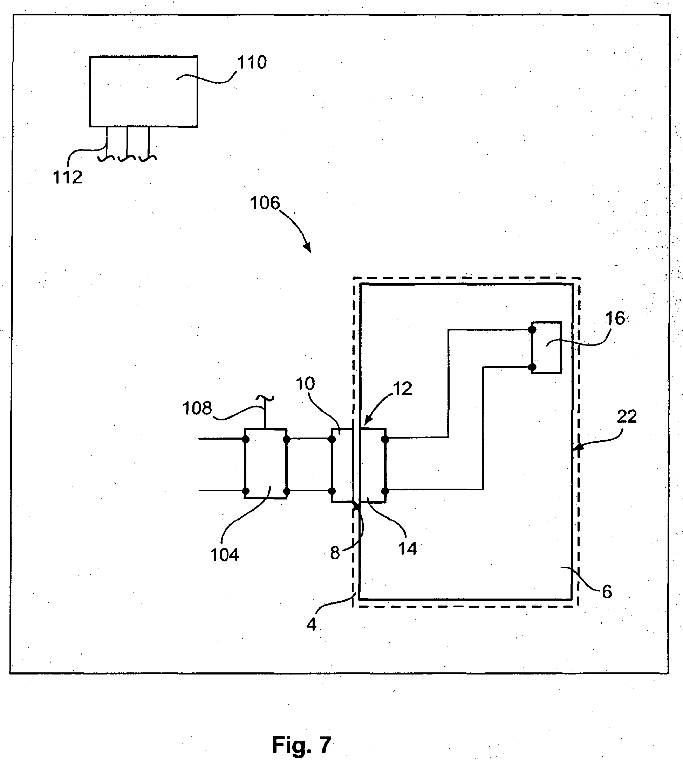

In Fig. 7 wird schließlich ein erfindungsgemäßes Trägersystem 106 gezeigt, das sich durch eine Elektronikeinheit 104 kennzeichnet, die durch Änderung der elektrischen Eigenschaften des Primärelements 10 eine Verbindung mit einem Sekundärelement 14 detektieren kann. Durch einen Signal- oder Datenausgang 108 kann dieser Zustand an eine Anzeigeeinheit 110 übermittelt werden, die hierfür eine Reihe von Signal- oder Dateneingängen 112 aufweist. Dadurch kann bei der Beladung eines Fahrzeugs eine Beladungsanzeige realisiert werden, die die ordnungsgemäße Funktion der elektrischen Verbraucher 16 in den Behältern 6 sowie deren korrekte Position auf einfache Weise belegen kann.

Die Darstellung des Frachtraums 72 ist in den Fig. 4a bis 6b exemplarisch dargestellt. Es ist jedoch auch ein anderer Aufnahmeraum zum Aufnehmen bewegbarer Behälter für Personen möglich, der in einem Bereich einer Passagierkabine angeordnet ist.

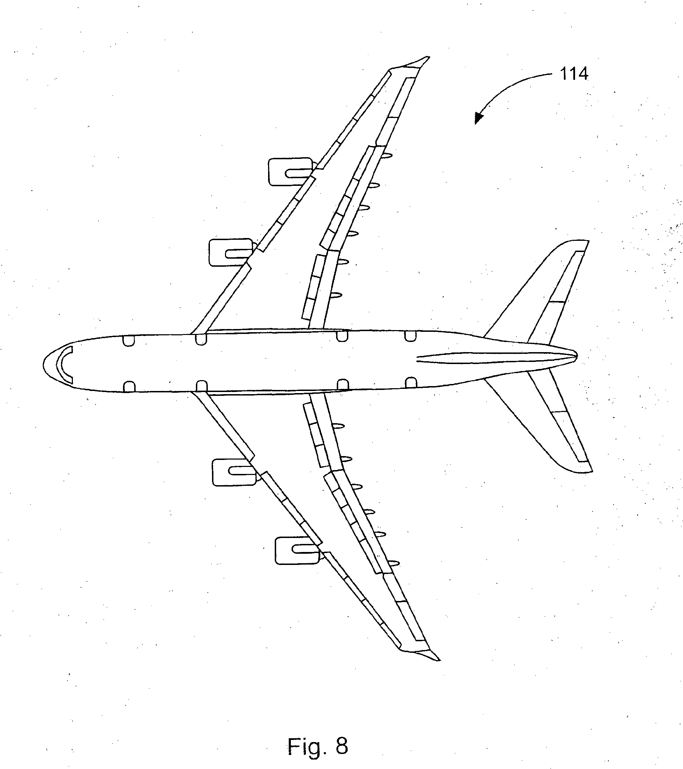

Schließlich zeigt Fig. 8 ein Flugzeug, das mit mindestens einem erfindungsgemäßen Trägersystem ausgestattet ist.

Ergänzend sei darauf hinzuweisen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Trägersystem
- 4: Aufnahmeraum
- 6: Behälter
- 8: Begrenzungsfläche
- 10: Primärelement
- 12: Begrenzungsfläche
- 14: Sekundärelement
- 16: elektrischer Verbraucher
- 18: Trägersystem
- 20: Schalteinheit
- 22: Vorderseite
- 24: Schalteinheit
- 26: Trägersystem
- 28: Primärelement
- 30: Sekundärelement
- 32: Trägersystem
- 34: Steuereinheit
- 36: Daten
- 38: Dateneingang
- 40: Steuereinheit
- 42: Signaleingang
- 44: Spannungsausgang
- 46: Trägersystem
- 48: Primärelement
- 50: Sekundärelement
- 52: Daten
- 54: erste Steuereinheit
- 56: zweite Steuereinheit
- 58: Trägersystem
- 60: Flugzeugküche
- 62: Aufnahmeraum
- 64: Primärelement
- 66: Servierwagen
- 68: Sekundärelement
- 70: Kühleinrichtung
- 72: Frachtraum
- 74: Begrenzungsfläche
- 76: Primärelement
- 78: Sekundärelement
- 80: Frachtcontainer
- 82: Kühlvorrichtung
- 84: Ruheraum
- 86: Beleuchtungseinrichtung
- 88: Liege
- 90: Steckdose
- 92: Telefon
- 94: Anzeigeeinheit
- 96: Behälter
- 98: Aufzug
- 100: Wandelement
- 102: Kabinenfußbodenöffnung
- 104: Elektronikeinheit
- 106: Trägersystem
- 108: Signal- oder Datenausgang
- 110: Anzeigeeinheit
- 112: Signal- oder Dateneingang
- 114: Flugzeug

## Patentansprüche

1. Trägersystem zur Aufnahme von Ruheräumen in einem Fahrzeug, aufweisend
- mindestens einen Ruheraum (84) zum Unterbringen von Personen, der mindestens eine Ruheraum aufweisend eine vorbestimmte Behälterform;
- einen Aufnahmeraum, der an die vorbestimmte Behälterform zum vollständigen Einschieben des Ruheraums in den Aufnahmeraum angepasst ist;
- mindestens einen in dem Ruheraum angeordneten elektrischen Verbraucher (16, 70, 82); und
- mindestens eine Primärwicklung in einem ersten Kern und mindestens eine Sekundärwicklung in einem zweiten Kern;
wobei die Sekundärwicklung in dem Ruheraum (84) angeordnet ist und die Primärwicklung derart fahrzeugseitig befestigbar ist, dass ein Bewegen des Ruheraums (84) in eine Aufnahmeposition zur Fluchtung der Primärwicklung und der Sekundärwicklung führt;
wobei die Primärwicklung und die Sekundärwicklung dazu eingerichtet sind, eine an der Primärwicklung anliegende Wechselspannung in die Sekundärwicklung zu induzieren und
wobei der elektrische Verbraucher (16, 70, 82) mit der Sekundärwicklung verbunden ist.

2. Trägersystem nach Anspruch 1, ferner aufweisend mindestens eine Schalteinheit (20) zum Unterbrechen der Verbindung zwischen elektrischem Verbraucher (16, 70, 82) und der Sekundärwicklung.

3. Trägersystem nach Anspruch 1 oder 2, ferner aufweisend mindestens eine Schalteinheit (24) zum Unterbrechen der Verbindung zwischen der Primärwicklung und einer Spannungsquelle.

4. Trägersystem nach einem der vorhergehenden Ansprüche, ferner aufweisend
- mindestens eine erste Steuereinheit (34) mit einem Spannungseingang, einem Dateneingang (38) und einem Signalausgang,
- mindestens eine zweite Steuereinheit (40) mit einem Signaleingang (42), einem Datenausgang und einem Spannungsausgang (44);
wobei sich die Primärwicklung mit dem Signalausgang der ersten Steuereinheit (34) verbinden lässt und die Sekundärwicklung mit dem Signaleingang (42) der zweiten Steuereinheit (40) verbinden lässt, die erste Steuereinheit (34) dazu eingerichtet ist, aus einer am Spannungseingang anliegenden elektrischen Spannung eine Wechselspannung am Signalausgang zu erzeugen, deren Frequenz in Abhängigkeit von den am Dateneingang (38) eingehenden Daten (36) moduliert wird und die zweite Steuereinheit (40) dazu eingerichtet ist, aus der am Signaleingang (42) anliegenden modulierten Wechselspannung die Daten (36) zu demodulieren und am Datenausgang bereitzustellen.

5. Trägersystem nach Anspruch 4, wobei der elektrische Verbraucher (16, 80, 82) dazu eingerichtet ist, durch die Daten (36) angesteuert zu werden.

6. Trägersystem nach Anspruch 4 oder 5, ferner aufweisend zum Leiten von Daten (52) nach außen
- eine weitere erste Steuereinheit (54) und eine weitere Primärwicklung, die in dem Ruheraum (84) angeordnet sind;
- eine weitere zweite Steuereinheit (56) und eine weitere Sekundärwicklung, die fahrzeugseitig anbringbar sind.

7. Trägersystem nach einem der vorherigen Ansprüche, wobei der elektrische Verbraucher (16, 70, 82) eine Kühleinrichtung ist.

8. Trägersystem nach einem der Ansprüche 1 bis 6, wobei der elektrische Verbraucher (16, 70, 82) eine Heizeinrichtung ist.

9. Trägersystem nach einem der Ansprüche 1 bis 6, wobei der elektrische Verbraucher (16, 70, 82) ein Klimatisierungsgerät ist.

10. Trägersystem nach einem der Ansprüche 1 bis 6, wobei der elektrische Verbraucher (16, 70, 82) eine Beleuchtungseinrichtung ist.

11. Trägersystem nach einem der vorhergehenden Ansprüche, ferner aufweisend mindestens eine mit mindestens einer Primärwicklung oder mindestens einer Sekundärwicklung verbindbare Elektronikeinheit (104), die dazu eingerichtet ist, eine Verbindung zwischen einer Primärwicklung und einer Sekundärwicklung zu detektieren und ein Signal oder Daten über den Verbindungsstatus über einen Signal- oder Datenausgang (108) bereitzustellen.

12. Trägersystem nach Anspruch 11, ferner aufweisend mindestens eine mit mindestens einer Elektronikeinheit (104) verbindbare Anzeigeeinheit (110) zum Ausgeben mindestens eines Verbindungsstatus mindestens einer Primärwicklung und einer korrespondierenden Sekundärwicklung.

13. Flugzeug (114) mit mindestens einem Aufnahmeraum und mindestens einem Trägersystem nach einem der Ansprüche 1 bis 12 zur Aufnahme mindestens eines Ruheraums (84).

## Claims

1. A carrying system for receiving rest compartments in a vehicle, comprising
- at least one rest compartment (84) for accomodating persons, the rest compartment comprising a predetermined container shape;
- a receiving space adapted to the predetermined container shape for a complete insertion of the rest compartment into the receiving space;
- at least one electrical consumer (16, 70, 82) arranged in the rest compartment; and
- at least one primary winding in a first core and at least one secondary winding in a second core;
wherein the secondary winding is arranged in the rest compartment (84), and the primary winding is mountable on the vehicle side in such a manner that movement of the rest container (84) in a receiving position results in alignment of the primary winding and the secondary winding;
wherein the primary winding and the secondary winding are adapted for inducing into the secondary winding an alternating voltage present at the primary winding; and
wherein the electrical consumer (16, 70, 82) is connected to the secondary winding.

2. The carrying system of claim 1, further comprising at least one switching unit (20) for interrupting the connection between the electrical consumer (16, 70, 82) and the secondary winding.

3. The carrying system of claim 1 or 2, further comprising at least one switching unit (24) for interrupting the connection between the primary winding and a voltage source.

4. The carrying system of any one of the preceding claims, further comprising
- at least one first control unit (34) with a voltage input port, a data input port (38) and a signal output port,
- at least one second control unit (40) with a signal input port (42), a data output port and a voltage output port (44);
wherein the primary winding is connectable to the signal output port of the first control unit (34), and the secondary winding is connectable to the signal input port (42) of the second control unit (40), the first control unit (34) is adapted, from an electrical voltage present at the voltage input port, for creating an alternating voltage at the signal output port, with the frequency of said alternating voltage being modulated depending on the data (36) arriving at the data input port (38), and the second control unit (40) is adapted, from the modulated alternating voltage present at the signal input port (42), for demodulating the data (36) and to provide it at the data output port.

5. The carrying system of claim 4, wherein the electrical consumer (16, 80, 82) is adapted for being controlled by the data (36).

6. The carrying system of claim 4 or 5, further comprising for transmitting data (52) to the outside
- a further first control unit (54) and a further primary winding that are arranged in the rest compartment (84);
- a further second control unit (56) and a further secondary winding that can be affixed on the vehicle side.

7. The carrying system of any one of the preceding claims, wherein the electrical consumer (16, 70, 82) is a cooling device.

8. The carrying system of any one of claims 1 to 6, wherein the electrical consumer (16, 70, 82) is a heating device.

9. The carrying system of any one of claims 1 to 6, wherein the electrical consumer (16, 70, 82) is an air conditioning device.

10. The carrying system of any one of claims 1 to 6, wherein the electrical consumer (16, 70, 82) is an illuminating device.

11. The carrying system of any one of the preceding claims, further comprising at least one electronics unit (104) connectable to at least one primary winding or at least one secondary winding, which electronics unit (104) is adapted for detecting a connection between a primary winding and a secondary winding, and for providing a signal or data relating to the status of connection by way of a signal or data output port (108).

12. The carrying system of claim 11, further comprising at least one display unit (110) that is connectable to at least one electronics unit (104) for issuing at least one status of connection of at least one primary winding and of a corresponding secondary winding.

13. An aircraft (114) with at least one receiving space and at least one carrying system of any one of claims 1 to 12 for receiving at least one rest-compartment (84).

## Revendications

1. Système porteur destiné à recevoir des espaces de repos dans un véhicule, comportant :
- au moins un espace de repos (84) destiné à accueillir des personnes, l'au moins un espace de repos présentant une forme de contenant prédéfinie ;
- un espace de réception, qui est adapté à la forme de contenant prédéfinie pour l'insertion complète de l'espace de repos dans l'espace de réception ;
- au moins un consommateur électrique (16, 70, 82) disposé dans l'espace de repos ; et
- au moins un enroulement primaire dans un premier noyau et au moins un enroulement secondaire dans un second noyau ;
dans lequel l'enroulement secondaire est disposé dans l'espace de repos (84) et l'enroulement primaire peut être fixé côté véhicule de telle manière qu'un déplacement de l'espace de repos (84) dans une position de réception conduit à l'alignement de l'enroulement primaire et de l'enroulement secondaire ;
dans lequel l'enroulement primaire et l'enroulement secondaire sont configurés pour induire dans l'enroulement secondaire une tension alternative appliquée à l'enroulement primaire et
dans lequel le consommateur électrique (16, 70, 82) est relié à l'enroulement secondaire.

2. Système porteur selon la revendication 1, comportant en outre au moins une unité de commutation (20) destinée à interrompre la connexion entre le consommateur électrique (16, 70, 82) et l'enroulement secondaire.

3. Système porteur selon la revendication 1 ou 2, comportant en outre au moins une unité de commutation (24) destinée à interrompre la connexion entre l'enroulement primaire et une source de tension.

4. Système porteur selon l'une des revendications précédentes, comportant en outre :
- au moins une première unité de commande (34) dotée d'une entrée de tension, d'une entrée de données (38) et d'une sortie de signal,
- au moins une deuxième unité de commande (40) dotée d'une entrée de signal (42), d'une sortie de données et d'une sortie de tension (44) ;
dans lequel l'enroulement primaire peut se relier à la sortie de signal de la première unité de commande (34) et l'enroulement secondaire peut se relier à l'entrée de signal (42) de la deuxième unité de commande (40), la première unité de commande (34) est configurée pour, à partir d'une tension électrique appliquée à l'entrée de tension, générer une tension alternative à la sortie de signal, dont la fréquence est modulée en fonction des données (36) arrivant à l'entrée de données (38) et la deuxième unité de commande (40) est configurée pour, à partir de la tension alternative modulée appliquée à l'entrée de signal (42), démoduler les données (36) et les fournir à la sortie de données.

5. Système porteur selon la revendication 4, dans lequel le consommateur électrique (16, 80, 82) est configuré pour être piloté par les données (36).

6. Système porteur selon la revendication 4 ou 5, comportant en outre, pour acheminer des données (52) vers l'extérieur,
- une autre première unité de commande (54) et un autre enroulement primaire, qui sont disposés dans l'espace de repos (84) ;
- une autre deuxième unité de commande (56) et un autre enroulement secondaire, qui peuvent être installés côté véhicule.

7. Système porteur selon l'une des revendications précédentes, dans lequel le consommateur électrique (16, 70, 82) est un moyen de refroidissement.

8. Système porteur selon l'une des revendications 1 à 6, dans lequel le consommateur électrique (16, 70, 82) est un moyen de chauffage.

9. Système porteur selon l'une des revendications 1 à 6, dans lequel le consommateur électrique (16, 70, 82) est un climatiseur.

10. Système porteur selon l'une des revendications 1 à 6, dans lequel le consommateur électrique (16, 70, 82) est un moyen d'éclairage.

11. Système porteur selon l'une des revendications précédentes, comportant en outre au moins une unité électronique (104) pouvant être reliée à au moins un enroulement primaire ou au moins un enroulement secondaire et qui est configurée pour détecter une connexion entre un enroulement primaire et un enroulement secondaire et pour fournir un signal ou des données concernant l'état de connexion par le biais d'une sortie de signal ou de données (108).

12. Système porteur selon la revendication 11, comportant en outre au moins une unité d'affichage (110) pouvant être reliée à au moins une unité électronique (104) et destinée à afficher au moins un état de connexion d'au moins un enroulement primaire et d'un enroulement secondaire correspondant.

13. Aéronef (114) comprenant au moins un espace de réception et au moins un système porteur selon l'une des revendications 1 à 12 pour recevoir au moins un espace de repos (84).
